## Europäisches Patentamt
## European Patent Office
## Office européen des brevets

(19)

(11) Numéro de publication: **0 131 505**
**B1**

(12) # FASCICULE DE BREVET EUROPÉEN

(45) Date de publication du fascicule du brevet:
**23.11.88**

(51) Int. Cl.⁴: **B 60 T 1/10**

(21) Numéro de dépôt: **84401348.2**

(22) Date de dépôt: **26.06.84**

(54) **Transmission hydrostatique à récupération d'énergie à freinage intégré.**

(30) Priorité: **28.06.83 FR 8310644**

(43) Date de publication de la demande:
**16.01.85 Bulletin 85/3**

(45) Mention de la délivrance du brevet:
**23.11.88 Bulletin 88/47**

(84) Etats contractants désignés:
**DE GB IT NL SE**

(56) Documents cité:
**EP-A-0 061 276**
**DE-A-2 804 399**
**GB-A-2 019 537**
**US-A-4 095 665**

**O + P Ölhydraulik und Pneumatik, 27(1983), Nr.2, Seiten 97-102, Prof.Dr.-Ing. H.W. Nikolaus: "Hydrostatische Fahrantriebe mit Energiespeicherung"**

(73) Titulaire: **REGIE NATIONALE DES USINES RENAULT, Boîte postale 103 8-10 avenue Emile Zola, F-92109 Boulogne- Billancourt (FR)**

(72) Inventeur: **Bouthors, Pierre, 25, Parc de l'Ecluse, F-78290 Croissy sur Seine (FR)**
Inventeur: **Mathiolon, Henri, 7, avenue de la Tranquillité, F-78000 Versailles (FR)**

(74) Mandataire: **Chassagnon, Jean- Alain, REGIE NATIONALE DES USINES RENAULT (S.0804), F-92109 Boulogne- Billancourt Cedex (FR)**

EP 0 131 505 B1

## Description

La présente invention concerne les systèmes de propulsion hybride pour véhicule automobile dans lesquels la transmission de puissance se fait par voie hydrostatique et où l'énergie peut être récupérée pendant la décélération et mise en réserve dans un dispositif de stockage.

D'une manière générale, ces systèmes permettent des économies substantielles de consommation de carburant, notamment en circulation urbaine, du fait de la récupération de l'énergie de freinage, et de la meilleure utilisation du moteur thermique dans les phases actives, et de la possibilité d'arrêt dudit moteur lorsque le véhicule est arrêté, et lors de l'utilisation de l'énergie stockée.

On connaît de tels systèmes, avec transmisson de puissance par voie mécanique et stockage par intertie de l'énergie de freinage; ou par voie hydrostatique avec stockage oléopneumatique ou parfois stockage par inertie de l'énergie de freinage, tel que le document DE-A-2 804 399 qui décrit un élément faisant office de moyen de freinage additionnel et consistant en un limiteur de pression. Ces systèmes sont prévus pour récupérer la quasi totalité de l'énergie de freinage en circulation urbaine, donc à vitesse faible ou modérée, mais ne sont pas prévus pour assurer le freinage complet du véhicule.

Par ailleurs, on connaît des systèmes de transmission de puissance hydrostatique dans lesquels la pompe hydrostatique est couplée au moteur thermique, et le ou les moteurs hydrostatiques sont couplés soit à l'entrée d'un boîtier mécanique d'inversion, soit directement à l'entrée ou différentiel transmettant mécaniquement la puissance aux roues motrices. Dans ces transmissions les composants hydrostatiques sont dimensionnés de manière à pouvoir passer à puissance maximum du moteur thermique, et en ce qui concerne les moteurs hydrostatiques pour absorber le couple résistant aux roues motrices à travers les réductions données par le différentiel et la boîte de vitesses.

On remarque aussi que ces systèmes, même s'ils prévoient la phase décélération avec récupération d'énergie de freinage, ne prévoient jamais l'emploi des mêmes organes hydrostatiques pour assurer le freinage direct des roues motrices.

La présente invention a pour but de réaliser un système à transmission de puissance hydrostatique, avec possibilité de récupération de l'énergie de freiange et stockage de celle-ci en vue d'utiliser le moteur thermique, dans sa zone de consommation économique, d'une façon intermittente au moins pour les puissances demandées moyennes, que ce soit en circulation urbaine ou en circulation routière à vitesse modérée; de telle manière que l'on puisse supprimer les organes de freinage sur les roues motrices.

Selon un mode de réalisation de l'invention, la transmission hydrostatique, fonctionnant en circuit fermé, avec récupération de l'énergie de freinage, comportant, intégré à chaque roue motrice, un moteur hydraulique relié à une pompe hydraulique à cylindre variable, alimentée par une pompe de gavage. Dans ladite transmission, les moteurs hydrauliques sont à cylindrée fixe et coopèrent avec des moyens de freinage additionnel consistant en un ou des limiteurs de pression à tarage proportionnel disposé dans ledit circuit fermé et faisant office et remplaçant les moyens connus de freinage du véhicule; lesdits moyens de freinage additionnel se combinant avec un distributeur hydraulique faisant fonction d'inverseur de sens de marche, et étant pilotés par des moyens de commande.

Selon un mode de réalisation de l'invention, les moyens de freinage additionnel consistent en un limiteur de pression à tarage proportionnel commandé directement par la pédale de frein.

Selon un mode de réalisation de l'invention, les moyens de freinage additionnel consistent en un limiteur de pression à tarage proportionnel monté sur le circuit hydraulique de chaque moteur hydraulique.

Selon un mode de réalisation de l'invention, le ou les limiteurs de pression à tarage proportionnel sont commandés hydrauliquement par le maître-cylindre de la pédale de frein.

Selon un mode de réalisation de l'invention, les limiteurs de pression à tarage proportionnel sont commandés électriquement.

D'autres caractéristiquus et avantages de la présente invention ressortiront de la description qui suit de modes de réalisation donnés à titre d'exemple, en référence aux dessins annexés sur lesquels:

- La figure 1 représente le schéma d'une transmission hydrostatique selon l'invention avec un seul limiteur de pression à tarage proportionnel commandé directement par la pédale de frein;

- la figure 2 représente le schéma d'une transmission hydrostatique selon l'invention avec un limiteur de pression à tarage proportionnel monté sur le circuit hydraulique de chaque moteur hydraulique;

- la figure 3 représente le schéma d'une commande hydraulique des limiteurs de pression à tarage proportionnel;

- la figure 4 représente la commande à l'aide d'un boîtier électronique des limiteurs de pression à tarage proportionnel;

- la figure 5 représente le schéma de la commande électrique des limiteurs de pression à tarage proportionnel et de la commande hydraulique du freinage des roues non motrices;

- la figure 6 représente un dispositif de stockage d'énergie selon l'invention.

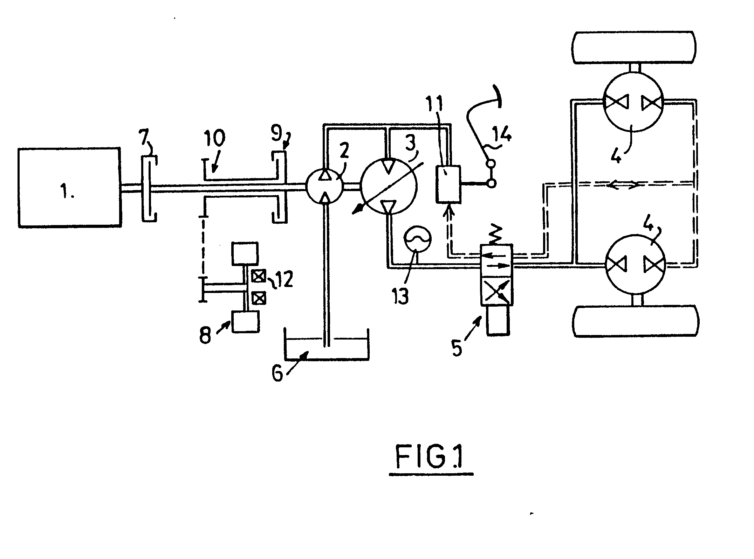

La figure 1 représente le schéma d'une transmission hydrostatique selon l'invention. Cette transmission hydrostatique à récupération d'énergie à freinage intégré comporte un moteur thermique 1 entraînant par l'intermédiaire d'un embrayage 7 une pompe de gavage 2 et la pompe hydrostatique elle-même 3. Le moteur thermique entraîne d'autre part par l'intermédiaire de l'embrayage 7 des moyens de stockage d'énergie qui possèdent leur embrayage propre 9 et un multiplicateur 10. Ce moyen de stockage d'énergie dans le cas de la figure est un volant d'inertie 8. Ainsi le volant d'inertie est monté en parallèle de ladite transmission. D'autre part, il peut y avoir un dispositif de récupération d'énergie consistant en un alternateur électrique 12. Cet alternateur électrique 12 peut être moteur pendant la phase de démarrage du véhicule.

La transmission hydrostatique proprement dite comprend la pompe de gavage 2 qui alimente la pompe hydrostatique 3. La pompe de gavage 2 aspire directement dans la bâche 6. La pompe hydrostatique 3 alimente deux moteurs hydrauliques 4 montés directement sur chacune des roues motrices. Le circuit de la transmission hydrostatique comprend de plus un distributeur hydraulique 5 faisant fonction d'inverseur de sens de marche. De plus, le circuit de cette transmission hydrostatique comprend un moyen de freinage additionnel consistant en un limiteur de pression à tarage proportionnel 11 commandé directement par la pédale de frein 14.

Enfin, le circuit de la transmission hydrostatique comporte un amortisseur 13 des variations angulaires de position de roue. La pompe hydrostatique 3 est à débit variable et les moteurs hydrauliques 4 sont à débit fixe.

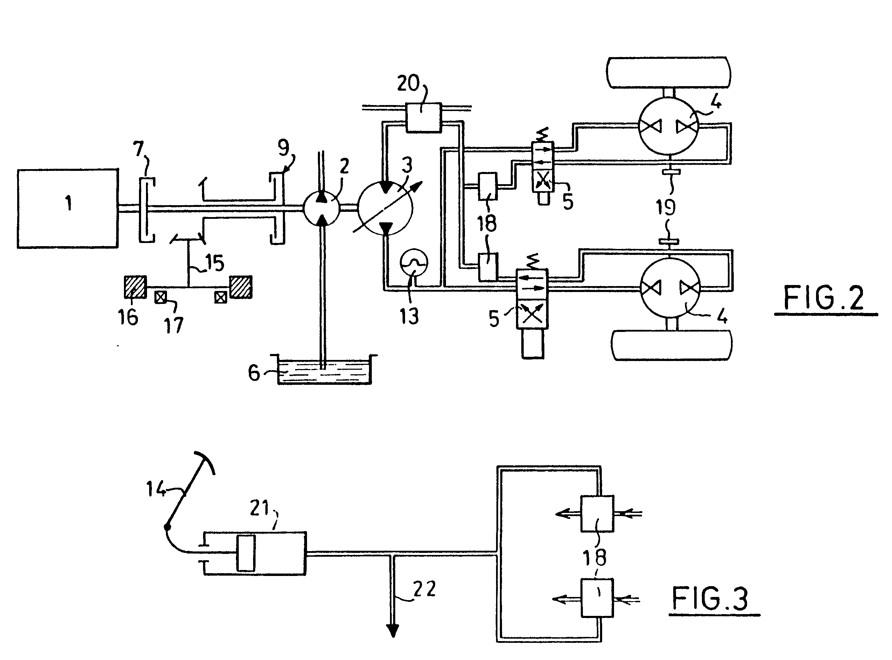

La figure 2 représente le schéma d'une transmission hydrostatique selon un autre mode de réalisation de l'invention. Cette transmission hydrostatique prend un moteur thermique 1 entraînant la pompe de gavge 2 et la pompe hydrostatique proprement dite 3 par l'intermédiaire d'un embrayage 7. D'autre part, ce moteur thermique 1 entraîne par l'intermédiaire de l'embrayage 7 un moyen de stockage d'énergie comprenant un multiplicateur en renvoi d'angle 15. Le stockage d'énergie se fait par un volant d'inertie 16. Le dispositif de récuperation d'énergie comporte un alternateur électrique 17 qui peut être moteur dans la phase de démarrage du véhicule. Ce dispositif de stockage d'énergie comprend son propre embrayge 9. Le circuit de la transmission hydrostatique proprement dite comprend la pompe de gavage 2 et la pompe à débit variable 3 reliées au moteur hydraulique à débit fixe 4. Chacun de ces moteurs 4 commande directement les roues motrices du véhicule. Chaque moteur hydraulique comporte un circuit hydraulique propre à distributeur hydraulique 5 faisant fonction d'inverseur de sens de marche. De plus, chacun de ces circuits hydrauliques propres à chaque moteur hydraulique comprend un limiteur de pression à tarage proportionnel 18. Enfin, le circuit général de la transmission hydrostatique comprend un échangeur 20 et un amortisseur 13 des variations angulaires de position de roue. Enfin l'invention peut comporter sur chacun des moteurs hydrauliques 4 des capteurs de vitesse angulaires des roues 19.

Le ou les limiteurs de pression à tarage proportionnel peuvent être commandés hydrauliquement par le maître-cylindre de la pédale de frein. Ceci est représenté sur la figure 1 où l'on voit la pédale de frein 14 commander directement le limiteur de pression 11 à tarage proportionnel.

La figure 3 représente un dispositif de commande hydraulique des limiteurs de pression 18 à tarage proportionnel qui sont représentés sur la figure 2. Sur cette figure 3, on voit la pédale de frein 14 qui agit sut le maître-cylindre 21. Lequel maître- cylindre 21 alimente chacun des circuits de commande hydraulique des limiteurs de pression 18 à tarage proportionnel. De plus, ce circuit de commande hydraulique peut alimenter par la dérivation 22 la commande du freinage des roues non motrices.

Le limiteur de pression 11 à tarage proportionnel ou les limiteurs de pression 18 à tarage proportionnel peuvent être commandés de manière électrique.

La figure 5 représente un dispositif de commande électrique des limiteurs de pression 18 à tarage proportionnel. Sur cette figure on peut voir la pédale de frein 14 qui actionne un capteur de position à sortie électrique 23 (potentiomètre). Ce capteur de position à sortie électrique 23 alimente les circuits électriques 25 de commande des limiteurs de pression 18 à tarage proportionnel. De plus, la pédale de frein 14 commande le maître-cylindre 21 qui pilote le circuit hydraulique 22 de commande des actionneurs de frein 24 (cylindres freinage). Ces cylindres de freinage 24 agissent sur les roues non motrices.

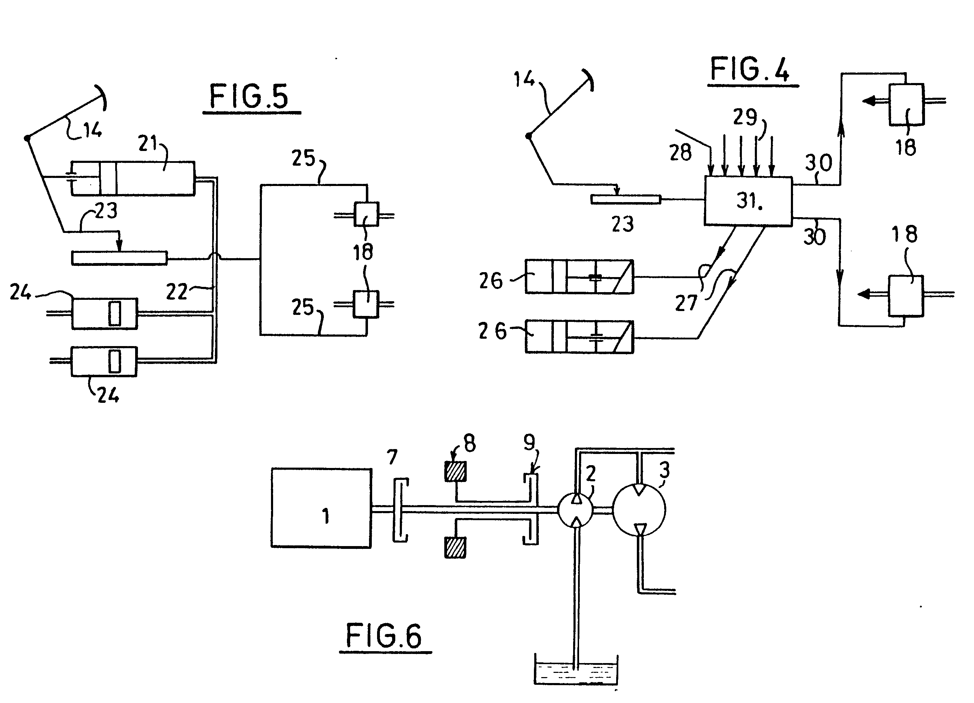

La figure 4 représente un dispositif de commande électrique des limiteurs de pression 18 à tarage proportionnel de la figure 2. La pédale de frein 14 commande le capteur de position à sortie électrique 23. Ce capteur de position 23 envoie une information au boîtier électronique 31. D'autre part, ce boîtier élctronique 31 reçoit les informations vitesse 29 de chacune des roues du véhicule. De plus, ce boîtier électronique 31 peut recevoir l'information vitesse instantanée du véhicule 28. Ce boîtier électronique 31 délivre des courants de commande 30 aux limiteurs de pression 18 à tarage proportionnel. Ce boîtier électronique 31 peut également délivrer des courants de commande 27 aux actionneurs de frein 26. Dans le cas de la figure 4, ces actionneurs de frein 26 sont des vérins électrohydrauliques. Dans un autre mode de réalisation de l'invention, ces actionneurs de frein peuvent être entièrement électriques.

La figure 6 représente un autre mode de réalisation de stockage d'énergie. Sur cette figure, le moteur thermique 1 entraîne le dispositif de stockage d'énergie par l'intermédiaire de l'embrayage 7. Le dispositif de stockage d'énergie a son embrayage propre 29 et comporte monté directement sur l'arbre de sortie du moteur un volant d'inertie 8. L'arbre moteur entraîne la pompe de gavage 2 et la pompe à débit variable 3 comme dans le cas des figures 1 et 2.

Les moyens de stockage d'énergie peuvent aussi consister en un dispositif oléopneumatique.

Les transmissions hydrostatiques représentées sur les figures 1 et 2 fonctionnent de la même manière. Ces transmissions hydrostatiques utilisent une pompe hydrostatique 3 à cylindrée variable dans un seul sens. Cette pompe 3 est alimentée par la pompe de gavage 2 qui aspire dans la bâche 6. Les deux pompes 2 et 3 sont entraînées par le moteur thermique 1 par l'intermédiaire de l'embrayage 7. Le débit de la pompe 3 dont la cylindrée est variable, est transmis aux deux moteurs-roues 4 dont la cylindrée est fixe dans les deux sens. Ce débit de la pompe au moteur se fait par l'intermédiaire d'un distributeur 5 permettant d'inverser le sens du débit pour effectuer la marche arrière du véhicule. La décélération du véhicule s'obtient par le fonctionnement de la transmission hydrostatique avec les moteurs 4 fonctionnant en pompe qui débitent alors dans la pompe hylraulique 3 fonctionnant en moteur.

Le freinage d'urgence est obtenu par le dispositif du limiteur de pression 11 à tarage proportionnel représenté sur la figure 1, des limiteurs de pressions 18 à tarage proportionnel représentés sur la figure 2.

Les différents moyens de stockage d'énergie dont ceux représentés sur les figures 1, 2 et 6 permettent de récupérer l'énergie du freinage donné par le fonctionnement de la transmission hydrostatique.

La figure 1 représente un dispositif de freinage d'urgence constitué d'un limiteur de pression 11 à tarage proportionnel commandé directement par la pédale de frein 14. Dans ce cas, le couple de freinage est le même sur chacune des deux roues motrices.

Dans le cas de la figure 2, le freinage d'urgence est indépendant sur chacune des deux roues motrices. Ceci permet à partir de l'information donnée par les capteurs de vitesse angulaire 19 d'agir sur le freinage de chaque roue motrice afin d'éviter le blocage ou le patinage desdites roues. On a ainsi les éléments pour réaliser un système d'anti-blocage des roues améliorant la sécurité lors du freinage.

On peut aussi concevoir les limiteurs de pression à tarage proportionnel 18 de façon à ce qu'ils soient pilotés par la pression du système classique de freinage hydraulique par maître-cylindre 21 comme cela est représenté sur la figure 3; ce freinage hydraulique classique assurant le freinage des roues non motrices. Dans ce cas, il n'y a pas de réalisation d'anti-blocage.

Dans le dispositif de commande du freinage d'urgence représenté sur la figure 4, le boîtier électronique 31 est conçu de telle manière que la vitesse de chacune des quatre roues reste lors du freinage à une valeur la plus proche possible de la vitesse moyenne des quatre roues, on évite ainsi le patinage ou le blocage d'une roue.

On peut compléter le dispositif, en envoyant au boîtier électronique 31 une information 28 liée à la vitesse instantanée du véhicule. Le boîtier électronique 31 cherchera dans ce cas à garder chacune des roues à une vitesse voisine de la vitesse instantanée du véhicule.

Sur la figure 5, il a été conservé le freinage classique par maître-cylindre 21 sur les roues non motrices; et l'utilisation par l'intermédiaire d'un potentiomètre 23 pour le freinage des roues motrices. Ce freinage d'urgence se fait alors par tarage électrique proportionnel au courant dans les limiteurs de pression 18 à tarage proportionnel pour le freinage des roues motrices. Dans ce cas, il n'y a pas d'anti-blocage des roues, mais il n'est pas nécessaire de conserver une assistance de freinage pour la commande classique, du fait qu'il n'y a que deux roues à freiner proportionnellement à l'effort exercé sur la pédale. Cela est particulièrement intéressant lors de l'emploi d'un moteur Diesel et permet d'éviter l'adjonction d'une pompe à vide.

**Revendications**

1. Transmission hydrostatique, fonctionnant en circuit fermé, avec récupération de l'énergie de freinage, comportant, intégré à chaque roue motrice, un moteur hydraulique (4) relié à une pompe hydraulique (3) à cylindre variable, alimentée par une pompe de gavage (2), caractérisée en ce que dans ladite transmission, les moteurs hydrauliques (4) sont à cylindrée fixe et coopèrent avec des moyens de freinage additionnel consistant en un ou des limiteurs de pression (11, 18) à tarage proportionnel disposé dans ledit circuit fermé et faisant office et remplaçant les moyens connus de freinage du véhicule; lesdits moyens de freinage additionnel se combinant avec un distributeur hydraulique (5) faisant fonction d'inverseur de sens de marche, et étant pilotés par des moyens de commande.

2. Transmission hydrostatique selon la revendication 1, caractérisée en ce que les moyens de freinage additionnel consistent en un limiteur de pression (11) à tarage proportionnel commandé directement par la pédale de frein (14).

3. Transmission hydrostatique selon la revendication 1, caractérisée en ce que les moyens de freinage additionnel consistent en un limiteur de pression (18) à tarage proportionnel monté sur le circuit hydraulique de chaque moteur hydraulique (4).

4. Transmission hydrostatique selon l'une des revendications 2 ou 3, caractérisée en ce que le ou les limiteurs de pression (11, 18) à tarage proportionnel sont commandés hydrauliquement par le maître-cylindre (21) de la pédale de frein (14).

5. Transmission hydrostatique selon la revendication 3, caractérisée en ce que les limiteurs de pression (11, 18) à tarage proportionnel sont commandés électriquement.

6. Transmission hydrostatique selon la revendication 5, caractérisée en ce que les moyens de commande consistent en un capteur de position à sortie électrique (23) lié à la pédale de frein (14), en parallèle avec le dispositif de freinage hydraulique des roues non motrices comprenant le maître-cylindre (21) de la pédale de frein (14) et les actionneurs de frein (24) des roues.

7. Transmission hydrostatique selon la revendication 5, caractérisée en ce que les moyens de commande consistent en un boîtier électronique (31) piloté par un capteur de position à sortie électrique (23) lié à la pédale de frein (14), lequel boîtier électronique (31) reçoit les informations vitesse (29) de chacune des roues du véhicule, ledit boîtier électronique (31) délivrant des courants de commande (30) aux limiteurs de pression (18) à tarage proportionnel.

8. Transmission hydrostatique selon la revendication 7, caractérisée en ce que le boîtier électronique (31) délivre des courants de commande (27) aux actionneurs des freins des roues non motrices.

9. Transmission hydrostatique selon la revendication 8, caractérisée en ce que les actionneurs de frein (26) des roues non motrices sont électrohydrauliques.

10. Transmission hydrostatique selon la revendication 8, caractérisée en ce que les actionneurs de frein des roues non motrices sont entièrement électriques.

11. Transmission hydrostatique selon la revendication 8, caractérisée en ce que le boîtier electronique (31) reçoit une information vitesse instantanée (28) du véhicule.

12. Transmission hydrostatique selon l'une quelconque des revendications précédentes, caractérisée en ce qu'elle comprend des moyens de stockage d'énergie.

13. Transmission hydrostatique selon la revendication 12, caractérisée en ce que les moyens de stockage d'énergie consistent en un volant d'inertie (8) monté en aval de l'embrayage de la transmission (7), lequel volant comporte son propre embrayage (9).

14. Transmission hydrostatique selon la revendication 12, caractérisée en ce que les moyens de stockage d'énergie consistent en un volant d'inertie (8) monté en aval de l'embrayage (7) de la transmission avec son propre embrayage (9), ledit volant d'inertie (8) étant monté en parallèle au moyen d'un multiplicateur (10).

15. Transmission hydrostatique selon la revendication 12, caractérisée en ce que les moyens de stockage d'énergie consistent en un volant d'inertie (16) monté en aval de l'embrayage de la transmission (7) avec son propre embayage (9), ledit volant d'inertie (16) étant monté en dérivation au moyen d'un multiplicateur en renvoi d'angle (15).

16. Transmission hydrostatique selon l'une des revendications 14 et 15, caractérisée en ce que le dispositif de récupération d'énergie comporte un alternateur électrique (12 - 17).

17. Transmission hydrostatique selon la revendication 16, caractérisée en ce que l'alternateur électrique (12 - 17) est moteur pendant la phase de démarrage du véhicule.

18. Transmission hydrostatique selon la revendication 12, caractérisée en ce que les moyens de stockage d'énergie consistent en un dispositif oléopneumatique.

19. Transmission hydrostatique selon l'une quelconque des revendications précédentes, caractérisée en ce qu'elle comporte un amortisseur (13) des variations angulaires de position de roue.

**Patentansprüche**

1. Hydraulisches Getriebe mit geschlossenem Kreislauf und mit Bremsenergie-Rückgewinnung, das integriert mit jedem Antriebsrad einen hydraulischen Motor (4) aufweist, der mit einer hydraulischen Pumpe (3) mit variablem Zylinder verbunden ist, die von einer Pumpe (2) gespeist wird, dadurch gekennzeichnet, daß die hydraulischen Motoren (4) im Getriebe einen festen Zylinderinhalt aufweisen und mit einer zusätzlichen Bremsanordnung zusammenwirken, die aus einem oder mehreren Druckbegrenzern (11, 18) mit Proportionalabgleich bestehen, welche im geschlossenen Kreislauf angeordnet sind und die bekannten Bremsanordnungen eines Fahrzeuges ersetzen; diese zusätzliche Bremsanordnung ist kombiniert mit einem hydraulischen Verteiler (5) zur Richtungsumkehr, der von einer Steueranordnung geregelt wird.

2. Hydraulisches Getriebe nach Anspruch 1, dadurch gekennzeichnet, daß die zusätzliche Bremsanordnung aus einem Druckbegrenzer (11) mit Proportionalabgleich besteht, der direkt vom Bremspedal (14) gesteuert wird.

3. Hydraulisches Getriebe nach Anspruch 1, dadurch gekennzeichnet, daß die zusätzliche Bremsanordnung aus einem Druckbegrenzer (18) mit Proportionalabgleich besteht, der im hydraulischen Schaltkreis eines jeden hydraulischen Motors (4) angeordnet ist.

4. Hydraulisches Getriebe nach einem der Ansprüche 2 oder 3, dadurch gekennzeichnet, daß der oder die Druckbegrenzer (11, 18) mit Proportionalabgleich hydaulisch gesteuert werden vom Hauptzylinder (21) des Bremspedals (14).

5. Hydraulisches Getriebe nach Anspruch 3, dadurch gekennzeichnet, daß die Druckbegrenzer (11, 18) mit Proportionalabgleich elektrisch gesteuert werden.

6. Hydraulisches Getriebe nach Anspruch 5, dadurch gekennzeichnet, daß die Steueranordnung aus einem Stellungsfühler mit elektrischem Ausgang (23) besteht, die mit dem Bremspedal (14) verbunden ist und parallel zur hydraulischen Bremsanordnung der nichtangetriebenen Räder geschaltet ist und den Hauptzylinder (21) des Bremspedals (14) und die Betätiger der Bremse (24) des Rades aufweist.

7. Hydraulisches Getriebe nach Anspruch 5, dadurch gekennzeichnet, daß die Steueranordnung aus einer elektronischen Schaltung (31) besteht, die von einem Positionsfühler mit elektrischem Ausgang (23) gesteuert wird, welcher mit dem Ausgangspedal (14) verbunden ist, wobei die elektronische Schaltung (31) Informationen bezüglich der Geschwindigkeit (29) eines jeden Fahrzeugrads erhält und die elektronische Schaltung (31) Steuerströme (30) an die Druckbegrenzer (18) mit Proportionalabgleich liefert.

8. Hydraulisches Getriebe nach Anspruch 7, dadurch gekennzeichnet, daß die elektronische Schaltung (31) Steuerströme (27) an die Bremsbetätiger der nichtangetriebenen Räder liefert.

9. Hydraulisches Getriebe nach Anspruch 8, dadurch gekennzeichnet, daß die Bremsbetätiger (26) der nichtangetriebenen Räder elektrohydraulisch sind.

10. Hydraulisches Getriebe nach Anspruch 8, dadurch gekennzeichnet, daß die Bremsbetätiger der nichtangetriebenen Räder vollständig elektrisch sind.

11. Hydraulisches Getriebe nach Anspruch 8, dadurch gekennzeichnet, daß die elektronische Schaltung (31) eine Information bezüglich der Augenblicksgeschwindigkeit (28) des Fahrzeugs erhält.

12. Hydraulisches Getriebe nach einem der vorhergehenden Ansprüche, dadurch gekennzeichnet, daß sie eine Anordnung zur Energiespeicherung aufweist.

13. Hydraulisches Getriebe nach Anspruch 12, dadurch gekennzeichnet, daß die Anordnung zur Energiespeicherung aus einem Trägheitsrad (8) besteht, das vor der Kupplung des Getriebes (7) angeordnet ist, wobei das Rad seine eigene Kupplung (9) aufweist.

14. Hydraulisches Getriebe nach Anspruch 12, dadurch gekennzeichnet, daß die Anordnung zur Energiespeicherung aus einem Trägheitsrad (8) besteht, das mit seiner eigenen Kupplung (9) vor der Kupplung (7) des Getriebes angeordnet ist, wobei das Trägheitsrad (8) parallel mittels einer Übersetzung (10) angeordnet ist.

15. Hydraulisches Getriebe nach Anspruch 12, dadurch gekennzeichnet, daß die Anordnung zur Energiespeicherung aus einem Trägheitsrad (16) besteht, das zusammen mit seiner eigenen Kupplung (9) vor der Kupplung des Getriebes (7) angeordnet ist, wobei das Trägheitsrad (16) über ein Winkelgetriebe (15) daneben angeordnet ist.

16. Hydraulisches Getriebe nach einem der Ansprüche 14 und 15, dadurch gekennzeichnet, daß die Vorrichtung zur Energierückgewinnung einen elektrischen Wechselstromgenerator (12 bis 17) aufweist.

17. Hydraulisches Getriebe nach Anspruch 16, dadurch gekennzeichnet, daß der elektrische Wechselstromgenerator (12 bis 17) während der Startphase des Fahrzeugs als Motor geschaltet ist.

18. Hydraulisches Getriebe nach Anspruch 12, dadurch gekennzeichnet, daß die Vorrichtung zur Energiespeicherung aus einer Öl-Druckluft-Vorrichtung besteht.

19. Hydraulisches Getriebe nach einem der vorhergehenden Ansprüche, dadurch gekennzeichnet, daß sie einen Puffer (13) für die Winkelvariationen der Radstellungen aufweist.

## Claims

1. A hydrostatic transmission, operating in closed circuit and with recovery of braking energy, the said transmission comprising, coupled directly to each driven road wheel, an hydraulic motor (4) connected to an hydraulic pump (3) of variable capacity and supplied through a feed pump (2), characterised in that, in the said transmission, the hydraulic motors (4) are of fixed capacity and cooperate with additional braking means comprising at least one proportional throw pressure limiter (11, 18) disposed in the said closed circuit, the pressure limiters serving as means for braking the vehicle and replacing the known braking means, the said additional braking means cooperating with an hydraulic distributor (5) which operates as a reverser for the direction of travel, and being controlled by control means.

2. A hydrostatic transmission according to Claim 1, characterised in that the additional braking means comprise a proportional throw pressure limiter (11) controlled directly by the brake pedal (14).

3. A hydrostatic transmission according to Claim 1, characterised in, that the additional braking means comprise a proportional throw pressure limiter (18) mounted in the hydraulic circuits of each hydraulic motor (4).

4. A hydrostatic transmission according to either one of Claims 2 or 3, characterised in that the proportional throw pressure limiter or limiters (11, 18) are controlled hydraulically by the master cylinder (21) of the brake pedal (14).

5. A hydrostatic transmission according to Claim 3, characterised in that the proportional throw pressure limiters (11, 18) are electrically controlled.

6. A hydrostatic transmission according to Claim 5, characterised in that the control means include a position sensor (23) giving an electrical output and connected with the brake pedal (14), in parallel with the hydraulic braking device for the non-driven road wheels comprising the master cylinder (21) of the brake pedal (14) and the brake actuators (24) of the road wheels.

7. A hydrostatic transmission according to Claim 5, characterised in that the control means include an electronic control unit (31) controlled by a position sensor (23) giving an electrical output and connected to the brake pedal (14), which electronic control unit (31) receives signals (29) representing the speed of each of the road wheels of the vehicle, the said electronic control unit (31) supplying control current signals (30) to the proportional throw pressure limiters (18).

8. A hydrostatic transmission according to Claim 7, characterised in that the electronic control unit (31) delivers current signals (27) to the actuators of the brakes for the non-driven road wheels, for controlling the said actuators.

9. A hydrostatic transmission according to Claim 8, characterised in that the brake actuators (26) for the non- driven road wheels are electro-hydraulic.

10. A hydrostatic transmission according to Claim 8, characterised in that the brake actuators for the non- driven road wheels are entirely electrical.

11. A hydrostatic transmission according to Claim 8, characterised in that the electronic control unit (31) receives a signal (28) representing the instantaneous speed of the vehicle.

12. A hydrostatic transmission according to any one of the preceding Claims, characterised in that it includes energy storage means.

13. A hydrostatic transmission according to Claim 12, characterised in that the energy storage means comprise an inertia fly wheel (8) mounted on the driven side of the transmission clutch (7), which fly wheel has its own clutch (9).

14. A hydrostatic transmission according to Claim 12, characterised in that the energy storage means comprise an inertia fly wheel (8) mounted on the driven side of the transmission clutch (7) and having its own clutch (9), the said inertia fly wheel (8) being mounted in parallel by means of step-up gear means (10).

15. A hydrostatic transmission according to Claim 12, characterised in that the energy storage means comprise an inertia fly wheel (16) mounted on the driven side of the transmission clutch (7) and having its own clutch (9), the said inertia fly wheel (16) being connected on the output side of a crown wheel step-up gear means (15).

16. A hydrostatic transmission according to either one of Claims 14 and 15, characterised in that the device for recovery of energy includes an electrical alternator (12 - 17).

17. A hydrostatic transmission according to Claim 16, characterised in that the electrical alternator (12 - 17) is arranged to act as a motor when the vehicle is in a starting mode.

18. A hydrostatic transmission according to Claim 12, characterised in that the energy storage means comprise an oleo-pneumatic device.

19. A hydrostatic transmission according to any one of the preceding Claims, characterised in that it includes a damper (13) for the damping of angular variations in road wheel position.

FIG1

FIG.2

FIG.3

FIG.5

FIG.4

FIG.6

0 131 505